# EUROPÄISCHE PATENTANMELDUNG

(11) **EP 4 715 772 A1**
(43) Veröffentlichungstag der Anmeldung: **25.03.2026**
(21) Anmeldenummer: 25192466.8
(22) Anmeldetag: 29.07.2025
(51) Int. Cl.: G07F 11/62, G07F 17/10

(54) **VERFAHREN UND VORRICHTUNG ZUR ZUORDNUNG EINES OBJEKTS**

(30) Priorität: 24.09.2024 DE 102024127600; 21.11.2024 DE 102024134308; 10.06.2025 DE 202025103226 U
(71) Anmelder: Itemdrop GmbH, 37671 Höxter (DE)
(72) Erfinder: Klocke, Maurice, 37671 Höxter (DE); Gmerek, Jonas, 40219 Düsseldorf (DE); Mertens, Marcel, 68163 Mannheim (DE); Duscha, Felix, 37671 Höxter (DE)
(74) Vertreter: Liesegang, Eva

(57) **Zusammenfassung**

Ein Verfahren zum Zuordnen eines Objekts umfasst: Annehmen eines Zahlungsmittels, Einleiten eines Zahlungsvorgangs auf der Basis des Zahlungsmittels, Empfangen eines Tokens, der mit dem Zahlungsmittel verknüpft ist, Verknüpfen des Tokens mit dem Objekt oder einem verfügbaren Platz für das Objekt.

## Beschreibung

### TECHNISCHES GEBIET

Die vorliegende Erfindung bezieht sich auf ein System und ein Verfahren zum Zuordnen eines Objekts.

### HINTERGRUND

Auf dem Gebiet der Objektspeicherung und -zuordnung ist es üblich, dass ein Platz für Objekte manuell ausgewählt wird und diese dann physisch an diesen Platz gebracht werden. Bekannte Systeme umfassen z.B. Garderoben, Schließfächer oder ähnliche Einrichtungen, bei denen ein Endnutzer einen physischen Schlüssel oder ein Ticket erhält, um ein Objekt, wie einen Mantel oder ein Paket, an einen bestimmten Platz abzugeben und den zugewiesenen Platz später wiederzufinden. Diese herkömmlichen Methoden erfordern oft eine erhebliche manuelle Interaktion und sind anfällig für menschliche Fehler, wie das Verlieren von Schlüsseln oder Tickets. Darüber hinaus können solche Systeme ineffizient sein, insbesondere in stark frequentierten Bereichen wie Theatern, Sportstadien oder Konferenzzentren, wo eine schnelle und zuverlässige Abgabe und Rückgabe von Objekten erforderlich ist.

Gemäß bekannter Ansätze werden in einigen moderneren Systemen elektronische Mittel verwendet, um die Zuordnung von Objekten zu erleichtern. Diese Systeme können RFID-Tags, Barcodes oder ähnliche Technologien nutzen, um Objekte zu identifizieren und zu verfolgen. Dennoch erfordern diese Systeme immer noch eine manuelle Eingabe durch den Nutzer oder das Personal, was zu Verzögerungen und möglichen Fehlern führen kann. Zudem speichern einige dieser Systeme personenbezogene Daten, was Datenschutzbedenken aufwerfen kann. Trotz Fortschritten auf dem Gebiet der Zuordnung von Objekten besteht nach wie vor ein Bedarf an verbesserten Systemen, die eine nahtlose, sichere und effiziente Zuordnung von Objekten ermöglichen, ohne dass personenbezogene Daten gespeichert werden müssen.

Ein weiteres Problem bei bestehenden Systemen ist die Notwendigkeit zusätzlicher Hardware oder spezieller Geräte, um die Zuordnung und Rückgabe von Objekten zu verwalten. Dies kann die Implementierung und Wartung solcher Systeme kostspielig und komplex machen.

Es ist ein der vorliegenden Erfindung zugrunde liegendes technisches Problem, ein System zur Zuordnung von Objekten bereitzustellen, das die Nachteile bekannter Systeme zumindest teilweise überwindet.

### ZUSAMMENFASSUNG

Die Erfindung ist in den Ansprüchen definiert.

Ein Verfahren zum Zuordnen von Objekten gemäß der Erfindung umfasst in einem ersten Aspekt: Annehmen eines Zahlungsmittels, wobei dies durch ein geeignetes Lesegerät oder ein Schnittstellenmodul erfolgen kann, das verschiedene Zahlungsmethoden wie Kreditkarten, Debitkarten, Zahlungen mit mobilen Endgeräten oder andere elektronische Zahlungsmittel unterstützt. Dies ermöglicht eine flexible und nutzerfreundliche Handhabung, die auf die unterschiedlichen Präferenzen der Endnutzer eingeht.

Anschließend wird ein Zahlungsvorgang auf der Basis des Zahlungsmittels eingeleitet. Hierzu kann Information des Zahlungsmittels an einen Zahlungsdienstleister übertragen werden. Dies kann durch die Integration von Verschlüsselungstechnologien und sicheren Kommunikationsprotokollen unterstützt werden, um die Sicherheit der Transaktionen zu gewährleisten und Betrugsversuche zu minimieren.

Ferner wird ein Token empfangen, der mit dem Zahlungsmittel verknüpft ist. Der Token kann z.B. aus hashed (gehashten) Daten des Zahlungsmittels gebildet sein. Dieser Token fungiert als eindeutiger Identifikator, der die Anonymität und Sicherheit der Transaktion erhöht, indem er anstelle der tatsächlichen Zahlungsinformationen verwendet wird. Dies kann helfen, die Herausforderung der Datensicherheit zu bewältigen und gleichzeitig eine schnelle und effiziente Verarbeitung zu ermöglichen.

Schließlich wird der Token mit dem Objekt oder einem verfügbaren Platz für das Objekt verknüpft. Dies kann durch das Schnittstellenmodul erfolgen, das in Echtzeit die Verfügbarkeit von Plätzen überwacht und den Token entsprechend zuordnet. Durch diese Verknüpfung kann das System eine effizientere Verwaltung der Plätze gewährleisten, was insbesondere in Bereichen wie Parkraummanagement, Lagerhaltung oder Veranstaltungsorganisation von Vorteil sein kann. Das System kann entsprechend auch auf die Ausgabe und Annahme von Mehrwegbehältern und -bechern eingesetzt werden.

Das Annehmen des Zahlungsmittels kann durch ein Schnittstellenmodul erfolgen, das verschiedene Zahlungsmethoden akzeptiert, wie Kreditkarten, Debitkarten oder mobile Zahlungssysteme. Dieses Schnittstellenmodul kommuniziert z.B. mit einem Zahlungsdienstleister, der die Authentizität und Gültigkeit des Zahlungsmittels überprüft. Die Verbindung zwischen dem Schnittstellenmodul und dem Zahlungsdienstleister erfolgt über sichere Kommunikationsprotokolle, um die Integrität der Zahlungsinformationen zu gewährleisten.

Das Einleiten des Zahlungsvorgangs auf der Basis des Zahlungsmittels umfasst das Senden von Zahlungsdaten an den Zahlungsdienstleister, nachdem das Zahlungsmittel angenommen wurde. Das Modul kann eine Anfrage an den Zahlungsdienstleister, der die Transaktion verarbeitet, senden.

Das Senden eines Tokens, der mit dem Zahlungsmittel verknüpft ist, kann durch den Zahlungsdienstleister erfolgen, der die Zahlungsanfrage verarbeitet und einen eindeutigen Token generiert. Dieser Token wird über eine gesicherte Verbindung an das Schnittstellenmodul zurückgesendet. Das Schnittstellenmodul speichert den Token und verknüpft ihn mit dem ursprünglichen Zahlungsmittel.

Das Verknüpfen des Tokens mit dem Objekt oder einem verfügbaren Platz für das Objekt wird von dem Schnittstellenmodul durchgeführt, das die Verfügbarkeit von Plätzen für Objekte und das Einstellen der Objekte überwacht. Der verfügbare Platz muss nicht individuell spezifiziert sein, er kann einer von mehreren verfügbaren Plätzen sein, unter denen ein Nutzer wählen kann.

Gemäß einer Ausführungsform kann das Verfahren ferner das Durchführen des Zahlungsvorgangs umfassen.

Beispielweise kann das Durchführen eines Zahlungsvorgangs ein Abbuchen eines Zahlungsbetrags, der für die Nutzung des Platzes erforderlich ist, umfassen.

Alternativ kann das Verfahren das Abbrechen des Zahlungsvorgangs umfassen. In dieser alternativen Fassung wird der Token zum Zuordnen des Platzes genutzt, die Nutzung ist jedoch kostenlos, so dass kein Zahlungsvorgang erfolgt.

Das Abbrechen des Zahlungsvorgangs bezieht sich auf den Vorgang, bei dem der zuvor eingeleitete Zahlungsvorgang gestoppt oder rückgängig gemacht wird. Dies kann vor der endgültigen Abwicklung der Transaktion geschehen und umfasst die Freigabe reservierter Beträge.

In anderen Beispielen kann das Verfahren zum Zuordnen eines Objekts alternativ oder vorgeschaltet zum Durchführen des Zahlungsvorgangs ein Reservieren eines Zahlungsbetrags umfassen. Das Reservieren eines Zahlungsbetrags bezieht sich auf einen Vorgang, bei dem ein bestimmter Zahlungsbetrag auf einem Konto des Zahlenden vorübergehend blockiert oder zurückgehalten wird. Die Reservierung stellt sicher, dass der Zahlungsbetrag zum Zeitpunkt der endgültigen Abwicklung der Transaktion bereitsteht, bis er nicht mehr benötigt wird.

Gemäß einer Ausführungsform kann das Verfahren zum Zuordnen eines Objekts zusätzlich das Einstellen des Objekts an dem verfügbaren Platz oder Ausgeben des Objekts oder Freigeben des verfügbaren Platzes umfassen. Dies kann die physische Bewegung des Objekts durch eine autorisierte Person oder automatisierte Mechanismen umfassen, so dass das Objekt korrekt an dem verfügbaren Platz eingestellt wird oder korrekt ausgegeben wird. Sobald das Objekt ausgegeben wurde, kann der verfügbare Platz freigegeben werden und einem neuen Objekt bzw. einem neuen Token zugeordnet werden.

Gemäß einer Ausführungsform kann das Verfahren zum Zuordnen eines Objekts ferner das Bestimmen, ob ein oder mehrere Objekte abgegeben oder ausgegeben werden sollen, und/oder der Art des Objekts umfassen. Dadurch kann festgelegt werden, ob ein einzelnes Objekt oder mehrere Objekte zur Lagerung oder zum Abstellen an dem verfügbaren Platz abgegeben werden möchte. Dies kann durch Nutzerinteraktion, wie beispielsweise eine Eingabeaufforderung oder eine Auswahl auf einem Display, oder durch automatische Erkennung, wie beispielsweise durch Sensoren oder Scanner, erfolgen.

Das Bestimmen der Art des Objekts, wie hierin verwendet, bezieht sich auf den Prozess, bei dem spezifische Merkmale oder Kategorien des Objekts identifiziert werden, das abgegeben wird. Dies kann die Größe, das Gewicht, das Material, QR- oder Barcodes, die auf dem Objekt abgebildet sein können, oder andere relevante Eigenschaften des Objekts umfassen und kann durch visuelle Inspektion, Scannen der QR- oder Barcodes oder RFID-Tags oder andere geeignete Erkennungsmethoden erfolgen. Abhängig von der Anzahl und Art des Objekts bzw. der Objekte kann der Zahlungsbetrag ermittelt werden.

Das Einleiten des Zahlungsvorgangs und das Empfangen des Tokens können unmittelbar aufeinander folgen. Hierbei können die genannten Schritte in Echtzeit erfolgen, wodurch eine sofortige Verarbeitung und Übertragung von Informationen ohne wahrnehmbare Verzögerung stattfinden.

Die Datenverarbeitung zum Einleiten des Zahlungsvorgangs, das Empfangen des Tokens und Verknüpfen des Tokens mit dem Objekt oder einem verfügbaren Platz können ohne Speicherung personenbezogener Daten erfolgen. So werden beim vorliegenden Verfahren keine Informationen gesammelt, gespeichert oder verarbeitet, die eine Identifizierung einer Person, der das Zahlungsmittel zugeordnet ist, ermöglichen. Im Kontext der Erfindung bedeutet dies, dass das Verfahren zum Zuordnen eines Objekts so gestaltet ist, dass keine persönlichen Informationen wie beispielsweise Namen, Adressen, Telefonnummern oder andere identifizierende Daten der Person, der das Zahlungsmittel zugeordnet ist, erfasst oder gespeichert werden. Dies trägt dazu bei, die Privatsphäre der Person, der das Zahlungsmittel zugeordnet ist, zu schützen und Datenschutzbedenken zu minimieren.

Gemäß einer Ausführungsform kann das Verfahren zum Zuordnen eines Objekts ferner das Speichern des Tokens, der mit dem Zahlungsmittel verknüpft ist, umfassen. Dies bedeutet, dass nach Einleiten des Zahlungsvorgangs der empfangene Token im System beispielsweise in einer Datenbank des Systems gespeichert wird, um ein späteres Zuordnen und/oder ein Herausgeben des Objekts zu ermöglichen.

Der verfügbare Platz kann z.B. visuell, akustisch oder mechanisch angegeben werden. Das System kann z.B. durch Anzeigen auf einem Bildschirm, durch Leuchten von LEDs, durch akustische Signale, wie Pieptöne oder Sprachansagen, durch Bewegen von Elementen, wie Öffnen/Entriegeln einer Tür oder eines Schließfachs, darauf hinweisen, wo das Objekt abgestellt werden kann oder wo das Objekt gelagert wurde. Diese Signale helfen, den zugewiesenen bzw. verfügbaren Platz schnell zu finden.

Das Objekt kann beispielsweise ein Kleidungsstück, Koffer, Fahrzeug, Mehrwegbehälter oder anderer Gegenstand sein.

Der Platz, dem das Objekt zugeordnet wird, kann ein temporärer Aufbewahrungsplatz, wie ein Schließfach, Raum, Garderobenplatz oder Parkplatz, sein.

Der Platz kann ein offener, abgegrenzter oder abgeschlossener Raum sein. Beispielsweise kann der Raum ein Zimmer sein.

Gemäß einer weiteren Ausführung kann das Verfahren ferner umfassen: Erneutes Annehmen des Zahlungsmittels; Einleiten eines Zahlungsvorgangs auf der Basis des Zahlungsmittels, Empfangen des Tokens, der mit dem Zahlungsmittel verknüpft ist, und Angeben des Platzes oder Ausgeben oder Annehmen des Objekts auf der Basis des Tokens.

Gemäß einem alternativen Aspekt kann das Verfahren umfassen: Annehmen eines Zahlungsmittels, Einleiten eines Zahlungsvorgangs auf der Basis des Zahlungsmittels, Empfangen eines Tokens, der mit dem Zahlungsmittel verknüpft ist, Angeben eines Platzes, auf dem sich das Objekt befindet, oder des Objekts auf der Basis des Tokens, und Autorisieren der Freigabe des Objekts.

Das Verfahren zum Zuordnen eines Objekts gemäß der Erfindung in dem alternativen Aspekt bezieht sich auf ein Abholvorgang für das Objekt, das bei dem Verfahren zum Zuordnen eines Objekts gemäß dem ersten Aspekt an einem verfügbaren Platz abgestellt wurde.

Beim Annehmen des Zahlungsmittels handelt es sich um dasselbe Zahlungsmittel, das im Verfahren zum Zuordnen eines Objekts gemäß dem ersten Aspekt der Erfindung verwendet wurde.

Das Einleiten eines Zahlungsvorgangs auf der Basis des Zahlungsmittels kann dem Einleiten eines Zahlungsvorgangs auf der Basis des Zahlungsmittels im Verfahren gemäß dem ersten Aspekt der Erfindung entsprechen.

Das Empfangen des Tokens, der mit dem Zahlungsmittel verknüpft ist, bezieht sich auf den Prozess, bei dem das System den eindeutigen Identifikator, den Token, vom Zahlungsserver des Zahlungsdienstleisters erhält. Dieser Token ist spezifisch mit dem verwendeten Zahlungsmittel verknüpft und dient dazu, die Zuordnung und Freigabe des Objekts zu ermöglichen.

Das Autorisieren der Freigabe des Objekts, das sich auf dem Platz befindet, bezieht sich auf den Prozess, bei dem die Berechtigung zur Freigabe des Objekts von dem zugewiesenen Platz im System erteilt wird. In diesem Zusammenhang überprüft das System, ob die erforderlichen Berechtigungen oder der richtige eindeutige Identifikator, wie der zuvor empfangene Token, der mit dem Zahlungsmittel verknüpft ist, vorliegen, um das Objekt abzuholen bzw. freizugeben. Nach erfolgreicher Autorisierung kann das Objekt freigegeben werden.

Gemäß einer weiteren Ausgestaltung dieses Aspekts kann der Zahlungsvorgang abgebrochen werden.

Das Abbrechen des Zahlungsvorgangs bezieht sich auf den Prozess, bei dem der zuvor eingeleitete Zahlungsvorgang gestoppt oder rückgängig wird. Nach Einleiten des Zahlungsvorgangs, welches ein Autorisieren des Zahlungsvorgangs umfassen kann, und nach Empfangen des Tokens wird der Zahlungsvorgang oder eine Transaktion anschließend storniert. Das Abbrechen des Zahlungsvorgangs stellt sicher, dass keine Belastung des Kontos der Person, der das Zahlungsmittel zugeordnet ist, erfolgt.

Gemäß einer Ausführungsform erfordert das Angeben des Platzes auf der Basis des Tokens neben dem Annehmen des Zahlungsmittels keine weitere Eingabe.

Gemäß einer Ausführungsform kann das Verfahren nach dem zweiten Aspekt ferner ein Freigeben des Platzes nach dem Herausgeben/Freigeben des Objekts für ein weiteres abzugebendes Objekt umfassen. Das bedeutet, dass das System den Platz automatisch freigibt und ihn für das Einstellen eines neuen Objekts bereitstellt, sobald das ursprüngliche Objekt entnommen wurde.

Eine Vorrichtung zum Zuordnen eines Objekts gemäß einem weiteren Aspekt der Erfindung umfasst: eine Einheit konfiguriert zum Lesen eines Zahlungsmittels, eine Einheit konfiguriert zum Einleiten eines Zahlungsvorgangs durch Senden von Zahlungsinformation an einen Zahlungsserver, eine Einheit konfiguriert zum Empfangen eines Tokens, der mit dem Zahlungsmittel verknüpft ist, von dem Zahlungsserver, eine Einheit konfiguriert zum Verknüpfen des Tokens mit dem Objekt oder einem verfügbaren Platz für das Objekt, und eine Einheit zum Angeben des Platzes oder Annehmen und/oder Ausgeben des Objekts.

Die Einheit konfiguriert zum Lesen eines Zahlungsmittels bezieht sich auf eine Komponente, die in der Lage ist, Informationen von einem Zahlungsmittel, wie z.B. einer Kreditkarte, Debitkarte, einem mobilen Zahlungssystem oder einem anderen elektronischen Zahlungsmittel, auszulesen. Diese Einheit kann verschiedene Technologien wie Magnetstreifenleser, Chipkartenleser, NFC (Near Field Communication), biometrische Erkennung oder QR-Code/Barcode-Scanner verwenden, um die Zahlungsinformationen zu erfassen.

Die Einheit konfiguriert zum Einleiten eines Zahlungsvorgangs durch Senden von Zahlungsinformation an einen Zahlungsserver stellt sicher, dass die Zahlungsinformationen sicher und zuverlässig an den Zahlungsserver gesendet werden, um die Autorisierung und Abwicklung der Zahlung zu ermöglichen. Diese Einheit kann die Zahlungsinformation unmittelbar online an den Zahlungsserver senden oder offline sammeln und senden, wenn sie wieder online ist.

Der Zahlungsserver kann sich auf einen Computer oder ein Netzwerk von Computern beziehen, das von einem Zahlungsdienstleister betrieben wird und für die Verarbeitung von Zahlungsvorgängen verantwortlich ist. Im Kontext der Erfindung bedeutet dies, dass der Zahlungsserver die Aufgabe hat, Zahlungsinformationen zu empfangen, zu überprüfen und zu autorisieren. Er kommuniziert mit Banken und anderen Finanzinstituten oder wird von diesen bereitgestellt, um die Verfügbarkeit von Mitteln zu überprüfen, Zahlungsvorgänge zu genehmigen oder abzulehnen und Tokens zu generieren, die mit dem Zahlungsmittel verknüpft sind.

Der Zahlungsdienstleister kann eine Bank oder ein anderes Finanzinstitut sein.

Gemäß einer Ausführungsform kann die Einheit konfiguriert zum Lesen des Zahlungsmittels für Near Field Communication, zum Scannen eines Codes, Lesen eines Magnetstreifens, Lesen eines Chips und/oder für biometrische Erkennung eingerichtet sein. Near Field Communication (NFC) ist eine drahtlose Kommunikationstechnologie, die den Austausch von Daten über kurze Distanzen ermöglicht. Diese Einheit kann Informationen von NFC-fähigen Geräten wie Smartphones, kontaktlosen Kredit- oder Debitkarten und anderen NFC-fähigen Zahlungsmitteln erfassen, um den Zahlungsvorgang einzuleiten.

In anderen Beispielen kann die Einheit konfiguriert zum Lesen des Zahlungsmittels auch andere Technologien wie Magnetstreifenleser, Chipkartenleser, biometrische Erkennung oder QR-Code/Barcode-Scanner verwenden, um die Zahlungsinformationen zu erfassen.

Biometrische Erkennung kann biologische Merkmale einer Person, beispielsweise durch Fingerabdrücke, Gesichtserkennung, Iris- oder Netzhautscans, Stimmerkennung und/oder Handvenenmuster zur Authentifizierung erkennen und diese zur Einleitung des Zahlungsvorgangs verwenden.

Gemäß einer Ausführungsform kann die Vorrichtung zum Zuordnen eines Objekts ferner eine Einheit konfiguriert zum Autorisieren des Zahlungsvorgangs, und/oder eine Einheit konfiguriert zum Einleiten eines Abbruchs des Zahlungsvorgangs bei dem Zahlungsserver umfassen.

Die Einheit zum Autorisieren des Zahlungsvorgangs kann den Token von dem Zahlungsserver empfangen.

Die Einheit zum Einleiten eines Abbruchs des Zahlungsvorgangs bei dem Zahlungsserver bezieht sich auf eine Komponente des Systems, die in der Lage ist, einen bereits eingeleiteten Zahlungsvorgang zu stoppen oder rückgängig zu machen. Diese Einheit kommuniziert mit dem Zahlungsserver, um den Abbruch der Transaktion zu veranlassen, wodurch reservierte Beträge gegebenenfalls freigegeben werden.

Ferner umfasst die Erfindung ein Computerprogramm mit computerlesbaren Anweisungen, die, wenn das Programm von einem Computer ausgeführt wird, den Computer veranlassen, das Verfahren wie oben beschrieben auszuführen.

### KURZBESCHREIBUNG DER FIGUREN

Die vorliegende Offenbarung wird unter Bezugnahme auf die Zeichnungen, in denen sie beispielhaft dargestellt ist, näher erläutert:
Abbildung 1 zeigt ein schematisches Flussdiagramm des Verfahrens zum Zuordnen eines Objekts gemäß einem Aspekt der Erfindung.
Abbildung 2 zeigt ein schematisches Flussdiagramm des Verfahrens zum Zuordnen eines Objekts gemäß einem weiteren Aspekt der Erfindung.
Abbildung 3 zeigt eine schematische Darstellung der Vorrichtung zum Zuordnen eines Objekts.
Abbildung 4.1 zeigt verschiedene Schritte des Verfahrens zum Zuordnen eines Objekts gemäß einem Beispiel.
Abbildung 4.2 zeigt korrespondierend zu den in Abbildung 4.1 dargestellten Verfahrensschritten die Benutzeroberfläche einer Vorrichtung zum Zuordnen eines Objekts gemäß einem Beispiel.
Abbildung 5.1 zeigt verschiedene Schritte des Verfahrens zum Zuordnen eines Objekts gemäß einem weiteren Beispiel.
Abbildung 5.2 zeigt korrespondierend zu den in Abbildung 5.1 dargestellten Verfahrensschritten die Benutzeroberfläche der Vorrichtung zum Zuordnen eines Objekts gemäß einem Beispiel.
Abbildung 6 zeigt ein schematisches Blockdiagramm des Systems zum Zuordnen eines Objekts gemäß einem Beispiel.
Abbildung 7 zeigt eine Vorrichtung und/oder ein System zum Zuordnen eines Objekts gemäß einem Beispiel.
Abbildung 8 zeigt eine Vorrichtung und/oder ein System zum Zuordnen eines Objekts gemäß einem weiteren Beispiel.

### DETAILLIERTE BESCHREIBUNG DER AUSFÜHRUNGSFORMEN

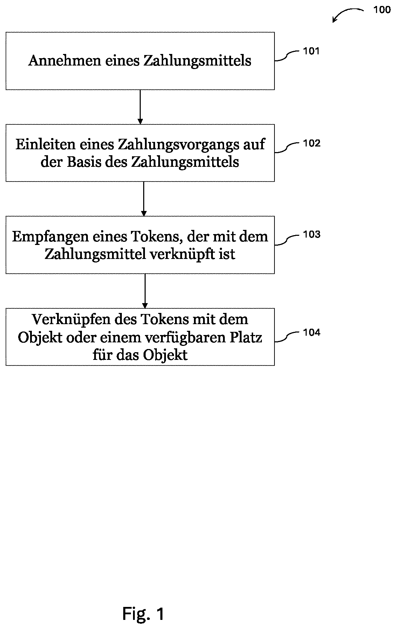

Abbildung 1 zeigt ein Flussdiagramm, das ein Verfahren zum Zuordnen eines Objekts gemäß einem Aspekt der Erfindung veranschaulicht. Das Verfahren umfasst mehrere Schritte, die in einer sequentiellen Reihenfolge ausgeführt werden. Alternativ können die Schritte des Verfahrens in einer anderen Reihenfolge ausgeführt werden.

Der Schritt 101 umfasst das Annehmen eines Zahlungsmittels durch ein Lesegerät. Dies kann durch verschiedene Methoden erfolgen, wie beispielsweise das Einlesen einer Kreditkarte, das Scannen eines QR-Codes, durch biometrische Erkennung oder die Nutzung einer mobilen Zahlungsanwendung. Das Zahlungsmittel dient als Grundlage für die weitere Verarbeitung.

Bei der biometrischen Erkennung können biologische Merkmale einer Person, wie mittels Fingerabdrücken, Gesichtserkennung, Iris- oder Netzhautscans, Stimmerkennung und/oder Handvenenmuster zur Authentifizierung erkannt werden und diese als ein Zahlungsmittel zur Einleitung des Zahlungsvorgangs entsprechend Schritt 102 oder 202 verwendet werden.

Im Schritt 102 wird ein Zahlungsvorgang auf der Basis des Zahlungsmittels eingeleitet. Dieser Schritt beinhaltet die Übermittlung der Zahlungsinformationen von dem Lesegerät an einen Zahlungsserver. Daten des Zahlungsmittels werden in dem Zahlungsserver verarbeitet, und es werden z. B. hashed Daten des Zahlungsmittels erzeugt. Auf der Basis des Zahlungsmittels kann so ein Token erzeugt werden.

Der Schritt 103 umfasst das Empfangen eines Tokens, der mit dem Zahlungsmittel verknüpft ist. Der Token dient als eindeutiger Identifikator, der die Transaktion repräsentiert und sicherstellt, dass die Zahlung korrekt zugeordnet werden kann. Der Token wird vom Zahlungsserver generiert, wie oben dargestellt, und an das System zurückgesendet, das den Zahlungsvorgang eingeleitet hat. Der Token kann somit auch das Zahlungsmittel eindeutig identifizieren.

Im Schritt 104 wird der empfangene Token mit dem Objekt oder einem verfügbaren Platz für das Objekt verknüpft. Dies kann beispielsweise ein temporärer Aufbewahrungsplatz, wie ein Lagerplatz, ein Schließfach, ein Raum, ein Parkplatz oder ein Garderobenplatz sein. Der Platz kann ein offener, abgegrenzter oder abgeschlossener Raum sein. Beispielsweise kann der Raum auch ein Zimmer sein. Die Verknüpfung des Tokens mit dem Platz ermöglicht es, den Platz eindeutig zu identifizieren und den entsprechenden Platz für die Aufbewahrung oder Abholung des Objekts zu reservieren. Alternativ ist es möglich, die grundsätzliche Verfügbarkeit eines von mehreren Plätzen anzuzeigen und den Zugang zu dem oder den freien Plätzen freizugeben.

Dieses Verfahren, das in Abbildung 1 gezeigt ist, kann in verschiedenen Anwendungen eingesetzt werden, um die Zuordnung und Verwaltung von Objekten zu optimieren. Beispiele für diese Anwendungen sind das Abstellen von Objekten in einem Schließfach, wobei die Angabe eines verfügbaren Platzes eine Schließfachtür aufspringen lässt. In einem anderen Beispiel wird dem Token ein Garderobenplatz oder anderer Aufbewahrungsplatz zugeordnet, der angegeben wird, um ein Kleidungsstück oder einen anderen Gegenstand dort abzulegen. In noch einem anderen Beispiel wird mit Empfang des Tokens die Schranke eines Parkplatzes oder eine ähnlich Zugangsbegrenzung geöffnet, um einen Platz freizugeben. In einem weiteren Beispiel wird dem Token ein Mehrwegbehälter, der an einen Endnutzer ausgegeben wird, zugeordnet.

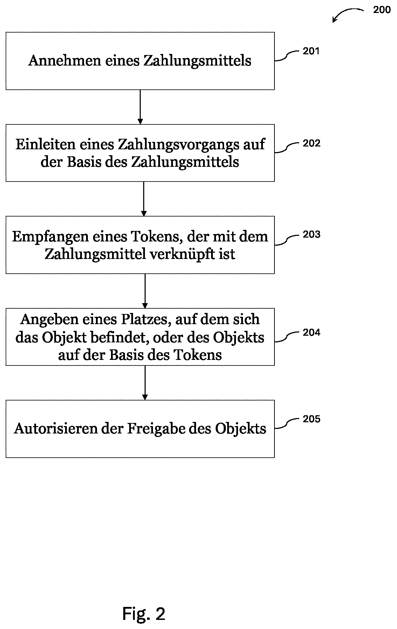

Abbildung 2 zeigt ein Flussdiagramm, das ein Verfahren zum Zuordnen eines Objekts gemäß einem weiteren Aspekt der Erfindung veranschaulicht. Das Verfahren umfasst mehrere Schritte, die in einer sequentiellen Reihenfolge ausgeführt werden. Alternativ können die Schritte des Verfahrens in einer anderen Reihenfolge ausgeführt werden.

Der Schritt 201 umfasst das Annehmen eines Zahlungsmittels. Dies kann wie bei Schritt 101 durch verschiedene Methoden erfolgen, wie beispielsweise das Einlesen einer Kreditkarte, das Scannen eines QR-Codes, durch biometrische Erkennung oder die Nutzung einer mobilen Zahlungsanwendung. Das Zahlungsmittel dient als Grundlage für die weitere Verarbeitung.

Im Schritt 202 wird ein Zahlungsvorgang auf der Basis des Zahlungsmittels eingeleitet. Dieser Schritt entspricht dem Schritt 102 und beinhaltet die Übermittlung der Zahlungsinformationen an einen Zahlungsserver. Der Zahlungsserver erzeugt erneut den Token auf der Basis der Information des Zahlungsmittels. Der Token entspricht dem zuvor bei der Abgabe des Objekts erzeugten Token und kann identisch sein. Dadurch kann es überflüssig werden, andere Informationen des Zahlungsmittels in dem System, dass das Zahlungsmittel annimmt und liest, zu speichern.

Der Schritt 203 umfasst das Empfangen des Tokens, der mit dem Zahlungsmittel verknüpft ist. Dieser Token dient als eindeutiger Identifikator, der die Transaktion und das Zahlungsmittel miteinander verknüpft. Der Token wird vom Zahlungsserver generiert und an die Einheit zurückgesendet, die den Zahlungsvorgang eingeleitet hat.

Der Schritt 204 umfasst das Angeben eines Platzes, auf dem sich das Objekt befindet, oder des Objekts auf der Basis des Tokens. Die Einheit, die diesen Schritt ausführt, verwendet den Token, um den Platz, auf dem sich das Objekt befindet, oder des Objekts zu identifizieren und anzugeben. Dies kann wie zuvor durch visuelle, akustische oder mechanische Signale erfolgen, die den Nutzer darüber informieren, wo das Objekt gelagert wurde.

Der Schritt 205 umfasst das Autorisieren der Freigabe eines Objekts, das sich auf dem Platz befindet.

Die Schritte 204 und 205 können zum Schritt 104 komplementär sein. Ein Beispiel ist das Freigeben von Objekten aus einem Schließfach, wobei die Freigabe die Schließfachtür aufspringen lässt, um anzuzeigen, wo sich das Objekt befindet. In einem anderen Beispiel wird dem Token ein Garderobenplatz oder anderer Aufbewahrungsplatz zugeordnet, der angegeben wird, um ein Kleidungsstück oder einen anderen Gegenstand dort zu entnehmen. In noch einem anderen Beispiel wird mit Empfang des Tokens die Schranke eines Parkplatzes oder eine ähnlich Zugangsbegrenzung geöffnet, um einen Platz wieder verlassen zu können. In einem weiteren Beispiel wird dem Token ein Mehrwegbehälter, der von einem Endnutzer zurückgegeben wird, zugeordnet.

Je nach Anwendung ist die Freigabe oder Herausgabe des Objektes bzw. Platzes mit einer Zahlung verknüpft, die abhängig von der Nutzungsdauer unterschiedlich hoch sein kann. In diesem Fall kann die Zahlung mit der Zuordnung des Tokens realisiert werden. Alternativ kann die Nutzung kostenfrei sein, wobei ein gegebenenfalls reservierter Betrag wieder freigegeben wird. In noch einer weiteren Ausgestaltung ist die Nutzung für eine definiert Zeitspanne kostenfrei und darüber hinaus kostenpflichtig. In diesem Fall wird die Zahlung abhängig von der Nutzungsdauer bewirkt oder storniert.

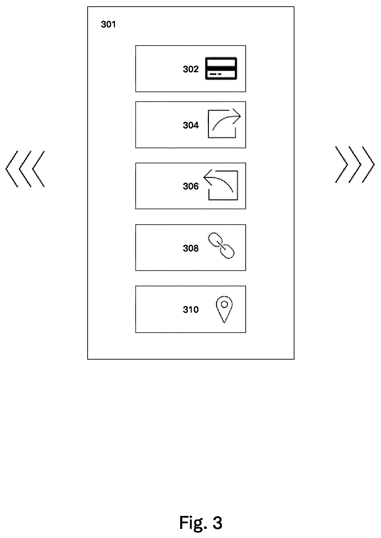

Abbildung 3 zeigt eine Vorrichtung 301 zum Zuordnen eines Objekts gemäß einem Beispiel. Diese Vorrichtung umfasst mehrere Einheiten, die spezifische Funktionen umsetzen, um z.B. die Verfahren 100 und/oder 200 auszuführen. Die Vorrichtung 301 dient als Schnittstellenmodul zwischen einem Nutzer und dem erfindungsgemäßen System.

Eine Einheit 302 ist konfiguriert zum Lesen eines Zahlungsmittels. Diese Einheit 302 kann verschiedene Technologien verwenden, wie z. B. Magnetstreifenleser, Chipkartenleser, Near Field Communication RFID/NFC oder ähnliche Sensoren, Scanner, PSAM-Kartensteckplatz, biometrische Erkennung, um die Informationen des Zahlungsmittels zu erfassen. Die erfassten Daten werden dann an die nächste Einheit 304 weitergeleitet.

Die Einheit 304 ist konfiguriert zum Einleiten eines Zahlungsvorgangs durch Senden von Zahlungsinformationen an einen Zahlungsserver. Diese Einheit kann die Informationen des Zahlungsmittels verarbeiten und kann die Kommunikation mit dem Zahlungsserver durchführen. Dies kann die Übermittlung von verschlüsselten Zahlungsdaten umfassen, um die Sicherheit der Transaktion zu gewährleisten.

Eine weitere Einheit 306 ist konfiguriert zum Empfangen eines Tokens, der mit dem Zahlungsmittel verknüpft ist, von dem Zahlungsserver. Nachdem der Zahlungsserver die Information des Zahlungsmittels vor verarbeitet hat, generiert er einen Token, zum Beispiel aus hashed Daten des Zahlungsmittels, der als eindeutiger Identifikator für die Transaktion dient. Der Token wird an die Vorrichtung zurückgesendet und von der Einheit 306 empfangen.

Eine Einheit 308 ist konfiguriert zum Verknüpfen des Tokens mit einem Objekt oder einem verfügbaren Platz für das Objekt. Diese Einheit verwendet den empfangenen Token, um einen Platz für das Objekt zu reservieren oder zuzuordnen. Dies kann durch Abgleich des Tokens mit einer Datenbank von verfügbaren Plätzen erfolgen, um sicherzustellen, dass der Platz korrekt zugeordnet wird. Alternativ kann durch Abgleich des Tokens mit der Datenbank der zugeordnete Platz abgerufen werden, um das auf dem Platz abgestellte Objekt abzuholen.

Eine Einheit 310 ist zum Angeben des Platzes oder Annehmen und/oder Ausgeben des Objekts konfiguriert. Diese Einheit kann den zugeordneten Platz visuell, akustisch oder mechanisch angeben, sodass ein Nutzer den Platz leicht identifizieren kann. Dies kann zum Beispiel durch Anzeigen auf einem Bildschirm, durch LEDs oder durch akustische Signale erfolgen.

Die Vorrichtung kann in verschiedenen Anwendungen eingesetzt werden, beispielsweise bei Garderobenplätzen, Schließfächern, Parksystemen, Lagereinrichtungen, wo eine präzise und sichere Zuordnung von Objekten erforderlich ist, oder anderen Plätzen, denen temporär ein Objekt zugeordnet werden kann.

Die Vorrichtung 301 kann auch zusätzliche Einheiten umfassen, die nicht in Abbildung 3 dargestellt sind, wie z. B. eine Einheit zum Einleiten eines Abbruchs des Zahlungsvorgangs bei dem Zahlungsserver.

Die Einheiten, die die verschiedenen Funktionen ausführen, können als Teile eines Computerprogramms in derselben Vorrichtung oder in mehreren Vorrichtungen realisiert sein. Sie können auch in Hardware in einer oder mehreren Vorrichtungen realisiert sein.

Beispielsweise kann die Vorrichtung 301 eine Netzwerkanbindung beinhalten, um den Zugriff auf externe Ressourcen und die Kommunikation mit anderen Systemen zu ermöglichen. Insbesondere kann die Vorrichtung 301 für die Verwendung von Wi-Fi-Kommunikation, mobiler Datenübertragung über 5G/4G/3G und/oder 2G Mobilfunknetze und/oder Bluetooth eingerichtet sein.

Ferner kann die Vorrichtung 301 mit GPS (Global Positioning System) ausgerüstet sein, um Standortbestimmungen und Navigationsfunktionen zu ermöglichen.

Auf die Vorrichtung 301 kann eine mobile Anwendung, beispielsweise eine Android-basierte, alternativ auch eine iOS-basierte Applikation, installiert sein. Zum Beispiel kann die mobile Anwendung mehrere Einheiten, insbesondere die Einheiten 302, 304, 306, 308, 310, die die spezifischen Funktionen umsetzen, um die Verfahren 100 und/oder 200 auszuführen, umfassen. Eine spezielle Anwendung, z. B. Android-basierte oder iOS-basierte Applikation, ist auf Seite des Endnutzers für die Funktion nicht notwendig. Der Endnutzer muss nur sein Zahlungsmittel bereithalten, wobei personenbezogene Daten des Endnutzers nicht in der Vorrichtung 302 oder an anderer Stelle des erfindungsgemäßen Systems gespeichert werden. So dient der Token, zum Beispiel aus hashed Daten des Zahlungsmittels, als eindeutiger Identifikator für die Transaktion, er enthält aber keine personenspezifischen Daten.

Die Vorrichtung 301 kann ein Bildschirm, der mit Tastatur, Touchscreen und/oder eine andere Eingabemethode ausgestattet ist, aufweisen In diesem Zusammenhang kann das Display als eine Benutzeroberfläche fungieren, wodurch der Nutzer mit dem System interagieren kann.

Die Vorrichtung 301 kann ein mobiles Endgerät sein.

In einem weiteren Beispiel kann die Vorrichtung 301 ein fester oder loser Bestandteil einer Station sein. Alternativ kann die Vorrichtung 301 ein zentrales oder dezentrales Terminal darstellen.

Als zentrales Terminal kann die Vorrichtung 301 als eine zentrale Steuereinheit oder Schnittstelle fungieren, die im System oder in einem Netzwerk als Hauptzugangspunkt für die Verwaltung, Steuerung und Kommunikation dient.

Die Vorrichtung 301 kann mit einer Kamera, Lautsprecher, LEDs und andere Hardware-Elemente ausgestattet sein.

Die Vorteile der Vorrichtung 301 umfassen eine hohe Zuverlässigkeit und schnelle Abwicklung der Transaktion, eine verbesserte Nutzerfreundlichkeit, die Möglichkeit einer bargeldlosen Transaktionsabwicklung und/oder den Verzicht auf physische Garderobenmarken oder andere Marken oder Tickets für die Platzzuweisung sowie eine vereinfachte Abrechnung ohne Speicherung personenbezogener Daten.

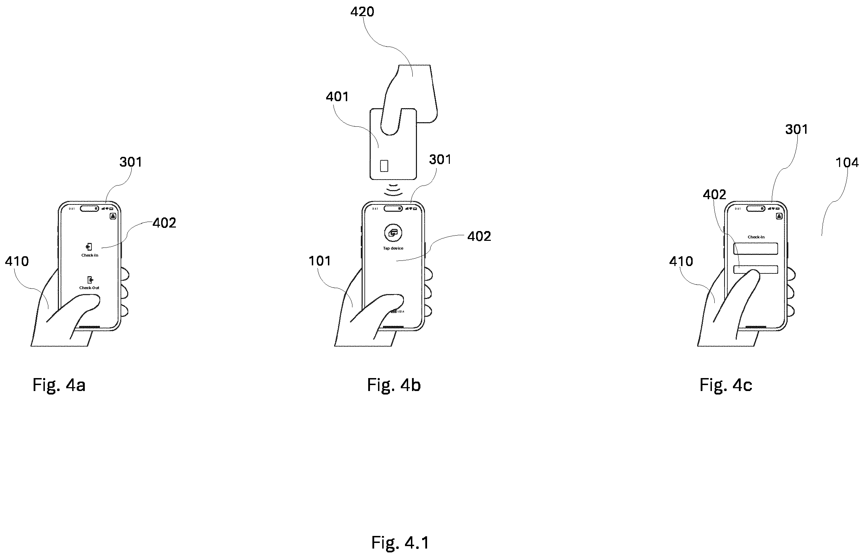

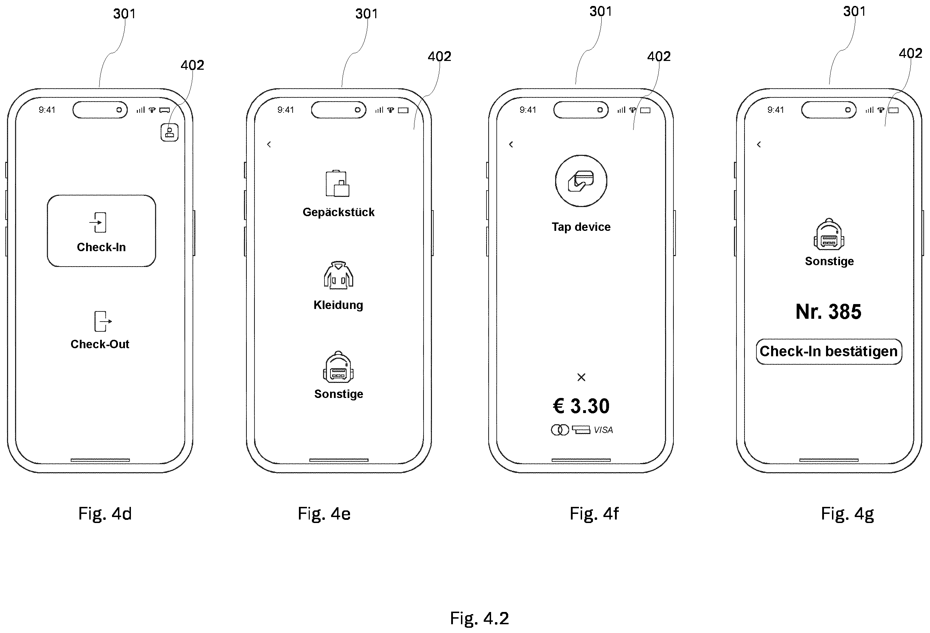

Abbildung 4, welche die Abbildungen 4.1 und 4.2 beinhaltet, illustriert verschiedene Schritte einer möglichen Ausführung des Verfahrens 100 zum Zuordnen eines Objekts. Abbildung 4.1 zeigt die Anwendung des Verfahrens 100 im Garderobenservice. Abbildung 4.2 stellt die Benutzeroberfläche der Vorrichtung 301 ergänzend zu Abbildung 4.1 dar.

In Abbildung 4a ist ein Beispiel der Vorrichtung 301 abgebildet, die von einem Nutzer 410 bedient wird. Auf dem Display der Vorrichtung 301 ist eine Benutzeroberfläche 402 zu sehen. Diese Benutzeroberfläche 402, wie in Abbildung 4d dargestellt, umfasst typischerweise Schaltflächen oder Menüs, die es dem Nutzer ermöglichen, einen Vorgang und/oder eine Zahlungsmethode auszuwählen und den Vorgang zu starten. Die Auswahl und Bestätigung des Zahlungsmittels erfolgt durch Interaktion mit der Benutzeroberfläche der Vorrichtung 301.

In einem Beispiel, siehe dazu Abbildung 4e, kann auf der Benutzeroberfläche 402 der Vorrichtung 301 zu Beginn des Verfahrens 100 ausgewählt werden, ob ein Objekt wie beispielsweise ein Kleidungsstück abgegeben oder abgeholt werden soll. Die Abgabe eines Objekts kann in einem Beispiel auf der Benutzeroberfläche als "Check-In" benannt sein. Die Abholung eines Objekts kann in einem Beispiel auf der Benutzeroberfläche als "Check-Out" benannt sein. Da die Figuren der Abbildung 4 das Verfahren 100, darstellen welches dazu dient, eine Abgabevorgang abzuwickeln, wählt der Nutzer 410 auf der Benutzeroberfläche 402 die Schaltfläche mit der Beschriftung "Check-In" aus.

In Abbildung 4b wird das Annehmen 101 eines Zahlungsmittels 401 einer Person 420 dargestellt. Abbildung 4f zeigt ein entsprechendes Beispiel für die Benutzeroberfläche beim Annehmen des Zahlungsmittels. Das Zahlungsmittel 401 der Person 420 wird in die Nähe der Vorrichtung 301 gebracht, um beispielsweise eine Near Field Communication NFC zu initiieren. Ferner werden im Hintergrund das Einleiten 102 eines Zahlungsvorgangs auf der Basis des Zahlungsmittels 401, das Empfangen 103 eines Tokens, der mit dem Zahlungsmittel 401 verknüpft ist, wobei das Einleiten des Zahlungsvorgangs und das Empfangen des Tokens unmittelbar aufeinander folgen, und das Verknüpfen 104 des Tokens mit einem verfügbaren Platz für das Objekt, ausgeführt. Die Vorrichtung 301 ist eingerichtet, die Zahlungsinformationen an einen Zahlungsserver zu senden, um den Zahlungsvorgang einzuleiten. In Antwort auf die Übermittlung der Daten des Zahlungsmittels 401 generiert der Zahlungsdienstleister den Token, der mit dem Zahlungsmittel 401 verknüpft ist. Der Token wird von dem Zahlungsdienstleister an die Einheit 306 der Vorrichtung 301 zurückgesandt.

Die Datenverarbeitung zum Einleiten des Zahlungsvorgangs, Empfangen des Tokens und Verknüpfen des Tokens mit einem verfügbaren Platz erfolgt ohne Speicherung personenbezogener Daten und ohne Speicherung der Daten des Zahlungsmittels 401. So werden beim vorliegenden Verfahren keine Informationen gesammelt, gespeichert oder verarbeitet, die eine Identifizierung der Person 420, der das Zahlungsmittel 401 zugeordnet ist, ermöglichen.

Bei einem kostenpflichtigen Garderobenservice kann der Zahlungsvorgang über das Zahlungsmittel abgewickelt werden.

Bei einem kostenfreien Garderobenservice kann ein Zahlungsbetrag bei dem Zahlungsanbieter reserviert und der Zahlungsvorgang später durch die Vorrichtung 301 abgebrochen werden.

Der Token wird sowohl bei einem kostenpflichtigen als auch bei einem kostenfreien Garderobenservice auf der Basis des Zahlungsmittels generiert und von der Vorrichtung 301 empfangen. In anderen Worten wird das Zahlungsmittel zum Erzeugen eines elektronischen Garderobentickets verwendet.

Abbildungen 4c und 4g zeigen ein Beispiel für ein visuelles Angeben des verfügbaren oder zugeordneten Platzes für das abgegebene Objekt. In anderen Beispielen kann das Angeben des verfügbaren oder zugeordneten Platzes akustisch erfolgen. Alternativ oder zusätzlich können durch mechanische Signale Hinweise gegeben werden, wo das Objekt abgestellt werden kann.

In anderen Beispielen kann auf dem Display der Vorrichtung 301 eine Bestätigung angezeigt werden, dass der Token empfangen wurde. Diese Bestätigung kann ebenso visuell oder akustisch erfolgen und angeben, dass der verfügbare Platz für das Objekt zugeordnet wurde. Die Bestätigung kann auch Informationen über den verfügbaren Platz enthalten, wie beispielsweise eine Platznummer oder einen Standort, wie es beispielsweise in der Abbildung 4g dargestellt ist.

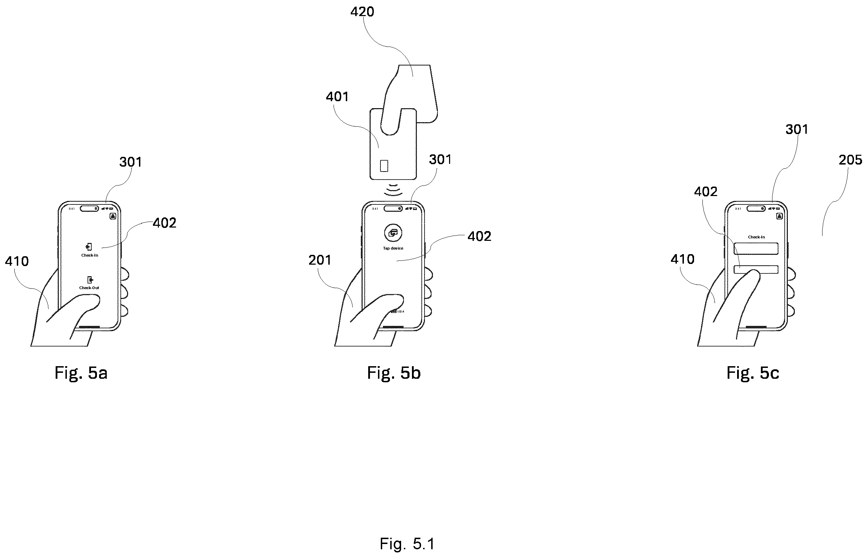

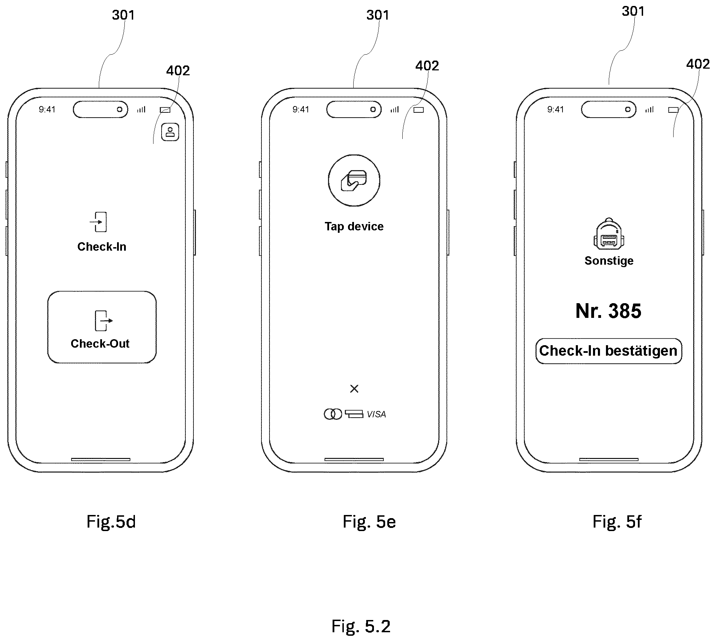

Abbildung 5, welche wie bei Abbildung 4 die Abbildungen 5.1 und 5.2 beinhaltet, zeigt eine mögliche Ausführungsform des Verfahrens 200 zum Zuordnen eines Objekts, das sich auf den Abholvorgang für das Objekt oder Kleidungsstück, das beim Verfahren 100 abgegeben wurde, bezieht. Abbildung 5.1 zeigt die Anwendung des Verfahrens 200 im Garderobenservice. Abbildung 5.2 bildet die Benutzeroberfläche 402 der Vorrichtung 301 ergänzend zu Abbildung 5.1 ab.

Abbildung 5a zeigt wieder die Vorrichtung 301, die von dem Nutzer 410 oder alternativ von einem anderen Nutzer bedient wird. Da es sich um einen Abholvorgang handelt, kann, wie in Abbildung 5d dargestellt, eine Schaltfläche mit der Beschriftung "Check-Out" auf der Benutzeroberfläche 402 ausgewählt werden.

In Abbildung 5b wird anschließend das Annehmen 201 des Zahlungsmittels 401 der Person 420 dargestellt. Abbildung 5e zeigt entsprechend zu Abbildung 5b ein Beispiel für die Benutzeroberfläche der Vorrichtung 301. Bei dem Zahlungsmittel handelt es sich um dasselbe Zahlungsmittel, das in dem in Abbildung 4b abgebildeten Beispiel verwendet wurde. Das Zahlungsmittel fungiert als Garderobenticket oder als ein Zugangsmittel zu dem abgegebenen Objekt. Das Zahlungsmittel wird wie in Bezug auf Abbildung 4 beschrieben genutzt, um Zahlungsinformationen an denselben Zahlungsdienstleister zu senden, der wiederum einen Token generiert und an die Einheit 306 der Vorrichtung 301 zurücksendet. Der Token wird genutzt, um den Platz, der dem Objekt zugeordnet war, abzurufen.

In den Abbildungen 5c und 5f werden der Platz auf Basis des Tokens, die Art des Objekts und eine Schaltfläche zur Bestätigung des Check-Outs auf dem Display der Vorrichtung 301 angezeigt.

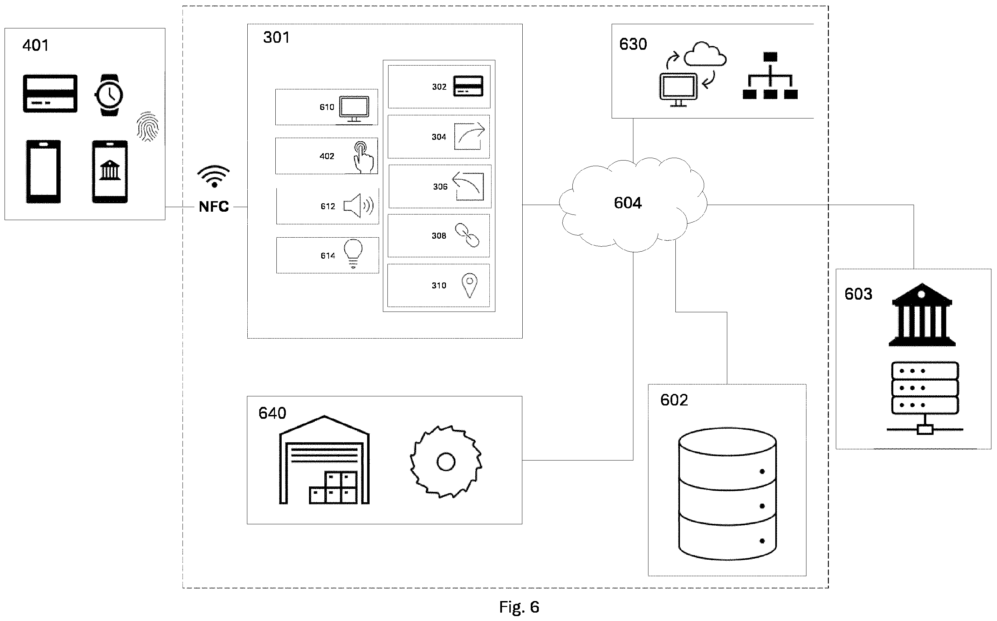

Abbildung 6 zeigt eine schematische Darstellung eines Systems zum Zuordnen eines Objekts, das verschiedene Komponenten und deren Interaktionen beispielhaft illustriert.

Das System umfasst die Vorrichtung 301, die mehrere Einheiten zur Durchführung spezifischer Funktionen enthält, insbesondere ein Zahlungsmittel 401, ein Backend-System 602, ein Zahlungsserver 603 eines Zahlungsdienstleisters, eine Verwaltungseinheit 630 und/oder eine Ausführungseinrichtung 640.

Die Vorrichtung 301 kann ein mobiles Endgerät, sein, das z.B. für Near Field Communication NFC oder WLAN-Kommunikation eingerichtet ist, sodass Zahlungsmittel 401, wie Kreditkarten, Debitkarten oder mobile Zahlungssysteme, über Tap-to-Pay-Technologie oder biometrische Erkennung für kontaktlose Zahlungsvorgänge bzw. Transaktionen erfasst werden können. Die Vorrichtung 301 kann für eine kostenpflichtige als auch eine kostenfreie Verwendung des Verfahrens 100 eingerichtet sein. Weitere Beispiele für die Vorrichtung 301 können der Beschreibung zu Abbildung 3 entnommen werden.

So kann die Vorrichtung 301 ferner Elemente wie einen Bildschirm 610, der touchbasiert sein kann, um eine Benutzeroberfläche 402 anzuzeigen, Lautsprecher 612 und LEDs 614 umfassen.

In einem Beispiel können über eine Verwaltungseinheit 630 beispielsweise neue Plätze, neue Standorte, neue mobile Endgeräte, die Anzahl der Nutzer, der Plätze und/oder die Auslastung der Plätze und/oder weiter organisatorische Aspekte verwaltet werden. Die Verwaltungseinheit 630 ist über ein Kommunikationsnetzwerk 604 mit der Vorrichtung 301 verbunden.

Die einzelnen in Abbildung 6 dargestellten Komponenten können grundsätzlich so eingerichtet sein, dass sie über das Kommunikationsnetzwerk 604 miteinander kommunizieren können. Das ermöglicht den Datenaustausch und die Koordination zwischen verschiedenen Vorrichtungen, Sensoren oder Subsystemen.

Das Kommunikationsnetzwerk 604 unterstützt z.B. sowohl die mobile Datenübertragung über ein Mobilfunknetz mit Technologien wie 2G, 3G, 4G und/oder 5G als auch die Kommunikation über Wi-Fi.

Wie oben beschrieben enthält die Vorrichtung 301 eine Einheit 302, die zum Lesen des Zahlungsmittels konfiguriert ist. Die Einheit 302 ermöglicht die Erfassung von Zahlungsinformationen, die für den weiteren Prozess erforderlich sind. Die erfassten Zahlungsinformationen werden an die Einheit 304 weitergeleitet, die für das Einleiten eines Zahlungsvorgangs durch das Senden der Zahlungsinformationen an einen Zahlungsserver zuständig ist.

Die Einheit 304 kommuniziert über das Kommunikationsnetzwerk 604 mit dem Zahlungsserver eines Zahlungsdienstleisters 603.

Bei einer kostenpflichtigen Verwendung des Verfahrens 100 kann durch die Einheit 304 dem Zahlungsserver des Zahlungsdienstleister 603 kommuniziert werden, dass der Zahlungsvorgang durchgeführt und/oder abgeschlossen und/oder ein bestimmter Betrag abgebucht werden soll.

Der Zahlungsserver des Zahlungsdienstleister 603 führt den Zahlungsvorgang durch und wendet z. B. eine Einweg-Hashfunktion, Payment Account Reference PAR oder ähnliche Technologien, auf die Daten des Zahlungsmittels an, um die Daten des Zahlungsmittels zu verschlüsseln und zu sichern. Aus z. B. den gehashten Daten wird ein Token generiert. Durch die Verwendung der Hashfunktion können keine Rückschlüsse auf die Daten des Zahlungsmittel 401 gezogen werden. Die Verwendung desselben Zahlungsmittels erzeugt denselben Token.

Der Zahlungsserver des Zahlungsdienstleister 603 sendet den generierten Token gegebenenfalls mit Details der durchgeführten Transaktion an die Vorrichtung 301 zurück.

Die Einheit 306 empfängt den Token, der mit dem Zahlungsmittel verknüpft ist, von dem Zahlungsserver.

Anschließend verknüpft die Einheit 308 den Token mit dem Objekt oder einem verfügbaren Platz für das Objekt, wodurch eine sichere und nachvollziehbare Zuordnung ermöglicht wird. Dies erfolgt durch die Kommunikation der Einheit 308 mit dem Backend-System 602 über das Kommunikationsnetzwerk 604.

Das Backend-System 602 kann eine Datenbank umfassen, die dazu eingerichtet ist, den empfangenen Token mit dem verfügbaren Platz zu verknüpfen und diese Verknüpfung oder den Token selbst zu speichern. Ferner werden im Backend-System 602 alle Daten verschlüsselt übertragen und gespeichert.

Die Einheit 310 gibt den verfügbaren Platz für das Objekt an bzw. frei und/oder nimmt das Objekt an.

Die Einheit 310 kann ferner mit der Ausführungseinrichtung 640 kommunizieren.

Die Ausführungseinrichtung 640 kann beispielsweise physische Baukomponenten wie Garderobenhaken, Mechanismen, die einen Befehl beispielsweise der Vorrichtung 301 umsetzen, Schließfächer oder Aufbewahrungsbehälter, die automatisch öffnen, Signalgeber wie LEDs und/oder Lautsprecher, Bildschirme und/oder andere Komponenten, die für ein System zur Zuordnung eines Objekts benötigt werden, umfassen.

Zum Beispiel kann die Einheit 310 eine physische Baukomponente veranlassen, den verfügbaren Platz für das Objekt an einen Annahmeort zu bewegen und/oder durch visuelle und/oder akustische Signale einen Hinweis für den Annahmeort geben. In einem anderen Beispiel kann die Einheit 310 veranlassen, dass sich eine Tür oder ein Schließfach öffnet.

Ferner kann die Einheit 304 der Vorrichtung 301 eine weitere Einheit (nicht gezeigt) zum Autorisieren des Zahlungsvorgangs, und/oder eine weitere Einheit (nicht gezeigt) zum Durchführen des Zahlungsvorgangs umfassen.

Bei einer kostenfreien Verwendung des Verfahrens 100 kann durch die Einheit zum Autorisieren des Zahlungsvorgangs dem Zahlungsserver des Zahlungsdienstleister 603 kommuniziert werden, dass der Zahlungsvorgang nicht autorisiert bzw. abgebrochen werden soll.

Statt den Zahlungsvorgang durchzuführen, reserviert der Zahlungsserver des Zahlungsdienstleister 603 einen Betrag, ohne diesen sofort abzubuchen, und wendet auch wie bei der kostenpflichten Verwendung eine Einweg-Hashfunktion, Payment Account Reference PAR oder ähnliche Technologien, auf die Daten des Zahlungsmittels an, um die Daten des Zahlungsmittels zu verschlüsseln und zu sichern. Aus z.B. den gehashten Daten wird ein Token generiert. Durch die Verwendung der Hashfunktion können keine Rückschlüsse auf die Daten des Zahlungsmittel 401 gezogen werden. Die Verwendung desselben Zahlungsmittels erzeugt denselben Token.

Der reservierte Betrag steht für eine bestimmte Zeit zur Verfügung und kann entweder vollständig abgebucht, angepasst oder vollständig storniert werden, je nachdem, wie die endgültigen Kosten der Dienstleistung ausfallen.

Bei der kostenfreien Verwendung des Verfahrens 100 kann durch die Einheit zum Einleiten eines Abbruchs des Zahlungsvorgangs dem Zahlungsserver kommuniziert werden, dass der Zahlungsvorgang und/oder der reservierte Betrag abgebrochen oder rückgängig gemacht werden soll. Das Autorisieren des Zahlungsvorgangs und das Einleiten des Abbruchs des Zahlungsvorgangs können unmittelbar aufeinander erfolgen.

Die Ausführung des Verfahrens 200, das einen Abholvorgang eines abgegebenen Objekts betrifft, kann identisch mit der kostenfreien Verwendung des Verfahrens 100 sein.

Bei der Ausführung des Verfahrens 200 kann durch die Einheit 304 mit dem Zahlungsserver des Zahlungsdienstleister 603 kommuniziert werden.

Der Zahlungsdienstleister 603 wendet auch wie bei der kostenpflichten Ausführung z.B. eine Einweg-Hashfunktion, Payment Account Reference PAR oder ähnliche Technologien, auf die Daten des Zahlungsmittels an, um die Daten des Zahlungsmittels zu verschlüsseln. Aus den gehashten Daten wird ein Token generiert. Durch die Verwendung der Hashfunktion können keine Rückschlüsse auf die Daten des Zahlungsmittel 401 gezogen werden. Die Verwendung desselben Zahlungsmittels erzeugt denselben Token.

Ferner kann durch die Einheit 304 dem Zahlungsserver kommuniziert werden, dass der Zahlungsvorgang und/oder ein reservierter Betrag abgebrochen oder rückgängig gemacht werden soll.

Der Zahlungsserver des Zahlungsdienstleister 603 sendet den generierten Token an die Vorrichtung 301 zurück.

Die Einheit 306 empfängt den Token, der mit dem Zahlungsmittel verknüpft ist, von dem Zahlungsserver.

Anschließend verknüpft die Einheit 308 den Token mit dem Objekt oder dem zugeordneten Platz für das Objekt, wodurch eine sichere und nachvollziehbare Zuordnung ermöglicht wird. Dies erfolgt durch die Kommunikation der Einheit 308 mit dem Backend-System 602 über das Kommunikationsnetzwerk 604.

Im Backend-System 602 kann die Datenbank, die dazu eingerichtet ist, den empfangenen Token mit dem zugeordneten Platz abzuspeichern, umfassen. Ferner werden im Backend-System 602 alle Daten verschlüsselt übertragen und gespeichert.

Die Einheit 310 gibt den Platz auf Basis des Tokens an und/oder gibt das Objekt aus. In diesem Zusammenhang kann die Einheit 310 zum Beispiel eine physische Baukomponente dazu veranlassen, den Platz, auf dem sich das Objekt befindet, oder das Objekt an einen Ausgabeort zu bewegen und/oder durch visuelle und/oder akustische Signale einen Hinweis für den Ausgabeort geben. In einem anderen Beispiel kann die Einheit 310 veranlassen, dass sich eine Tür oder ein Schließfach öffnet.

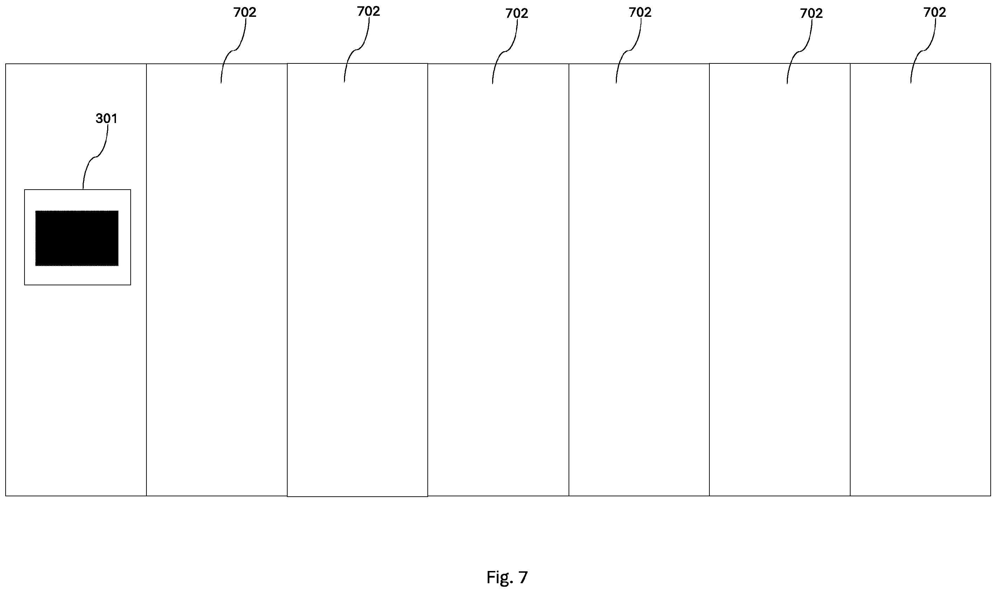

Abbildung 7 zeigt ein weiteres Ausführungsbeispiel für die Vorrichtung 301 und das System zum Zuordnen eines Objekts.

Abbildung 7 illustriert schematisch eine Reihe aus Schließfächern 702 mit der Vorrichtung 301 als ein zentrales Terminal.

Die Vorrichtung 301 dient, wie vorhergehend dargestellt, als Schnittstellenmodul zwischen einem Nutzer und dem erfindungsgemäßen System.

Wie zu den Abbildungen 3 und 6 beschrieben, umfasst die Vorrichtung 301 die Einheiten 302 bis 310. Die spezifischen Funktionen der Einheiten sind oben beschrieben und können so auch für das in Abbildung 7 gezeigte Beispiel angewendet werden.

Das zentrale Terminal kann als eine zentrale Steuereinheit oder Schnittstelle definiert werden, die zur Verwaltung, Steuerung und Kommunikation innerhalb des Systems dient.

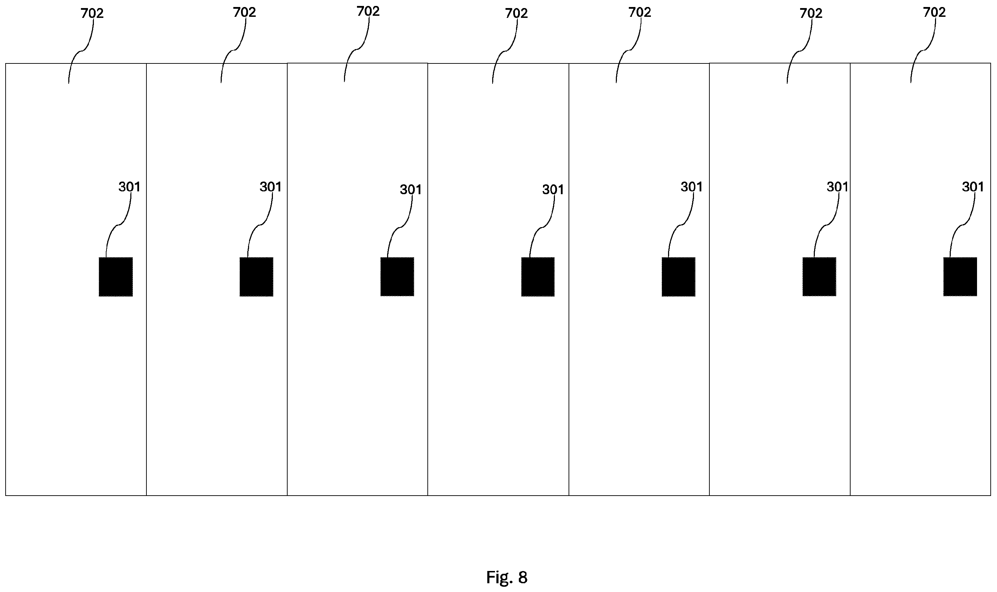

Abbildung 8 zeigt ein weiteres Ausführungsbeispiel für die Vorrichtung 301 und das System zum Zuordnen eines Objekts. Das Ausführungsbeispiel von Abbildung 8 unterscheidet sich vom Ausführungsbeispiel der Abbildung 7 dahingehend, dass das zentrale Terminal durch ein dezentrales Terminal ausgetauscht ist.

Abbildung 8 illustriert schematisch eine Reihe aus Schließfächern 702 mit Vorrichtungen 301 als dezentrale Terminals, wobei die Vorrichtungen 301 in jedem einzelnen Schließfach eingebettet sein können.

Die Vorrichtung 301 dient, wie vorhergehend dargestellt, als Schnittstellenmodul zwischen einem Nutzer und dem erfindungsgemäßen System, das im vorliegenden Beispiel ein verteiltes System ist. Auf diese Weise hat der Nutzer mehrere Zugangspunkte für die Abgabe eines Objekts.

Wie zu den Abbildungen 3 und 6 beschrieben, umfasst die Vorrichtung 301 die Einheiten 302 bis 310. Die spezifischen Funktionen der Einheiten können der obigen Beschreibung entnommen werden und auch für das in Abbildung 8 gezeigte Beispiel angewendet werden.

## Patentansprüche

1. Verfahren zum Zuordnen eines Objekts, umfassend:
Annehmen (101) eines Zahlungsmittels,
Einleiten (102) eines Zahlungsvorgangs auf der Basis des Zahlungsmittels,
Empfangen (103) eines Tokens, der mit dem Zahlungsmittel verknüpft ist,
Verknüpfen (104) des Tokens mit dem Objekt oder einem verfügbaren Platz für das Objekt.

2. Verfahren nach Anspruch 1, wobei das Einleiten des Zahlungsvorgangs auf der Basis des Zahlungsmittels ferner umfasst:
Senden von Zahlungsdaten auf der Basis des Zahlungsmittels an einen Zahlungsdienstleister; und
Empfangen des Tokens von dem Zahlungsdienstleister, insbesondere eines Tokens, der hashed Daten des Zahlungsmittels aufweist.

3. Verfahren nach einem der vorangehenden Ansprüche, ferner umfassend:
Durchführen des Zahlungsvorgangs oder Reservieren eines Zahlungsbetrags durch den Zahlungsdienstleister; und / oder Senden eines Signals zum Abbrechen des Zahlungsvorgangs an den Zahlungsdienstleister.

4. Verfahren nach einem der vorangehenden Ansprüche, ferner umfassend:
Übergeben des Objekts an den verfügbaren Platz oder Ausgeben des Objekts oder Freigeben des verfügbaren Platzes; und/oder visuelles oder akustisches oder mechanisches Angeben des verfügbaren Platzes.

5. Verfahren nach einem der vorangehenden Ansprüche, wobei der verfügbare Platz einer von mehreren verfügbaren Plätzen ist, unter denen ein Nutzer wählen kann.

6. Verfahren nach einem der vorangehenden Ansprüche, ferner umfassend:
Bestimmen, ob ein oder mehrere Objekte abgegeben oder ausgegeben werden sollen, und/oder der Art des Objekts.

7. Verfahren nach einem der vorangehenden Ansprüche, wobei das Einleiten des Zahlungsvorgangs und das Empfangen des Tokens unmittelbar aufeinander folgen.

8. Verfahren nach einem der vorangehenden Ansprüche, wobei eine Datenverarbeitung zum Einleiten des Zahlungsvorgangs, Empfangen des Tokens und Verknüpfen des Tokens mit einem verfügbaren Platz oder Objekt ohne Speicherung personenbezogener Daten erfolgt.

9. Verfahren nach einem der vorangehenden Ansprüche, ferner umfassend:
Speichern des Tokens, der mit dem Zahlungsmittel verknüpft ist.

10. Verfahren nach einem der vorangehenden Ansprüche, wobei das Objekt ein Kleidungsstück, Mehrwegbehälter, Koffer, Fahrzeug oder anderer Gegenstand und der Platz ein temporärer Aufbewahrungsplatz, wie ein Schließfach, Raum, Garderobenplatz oder Parkplatz, ist.

11. Verfahren nach einem der vorangehenden Ansprüche, ferner umfassend:
Erneutes Annehmen des Zahlungsmittels;
Einleiten (102) eines Zahlungsvorgangs auf der Basis des Zahlungsmittels, Empfangen des Tokens, der mit dem Zahlungsmittel verknüpft ist,
Angeben des Platzes oder Objekts auf der Basis des Tokens.

12. Verfahren nach Anspruch 11, wobei das Angeben des Platzes auf der Basis des Tokens außer dem Annehmen des Zahlungsmittels keine weitere Eingabe erfordert.

13. Vorrichtung (301) zum Zuordnen eines Objekts, umfassend:
eine Einheit (302) konfiguriert zum Lesen eines Zahlungsmittels,
eine Einheit (304) konfiguriert zum Einleiten eines Zahlungsvorgangs oder Authentifizierungsvorgangs durch Senden von Zahlungsinformation an einen Zahlungsserver,
eine Einheit (306) konfiguriert zum Empfangen eines Tokens, der mit dem Zahlungsmittel verknüpft ist, von dem Zahlungsserver,
eine Einheit (308) konfiguriert zum Verknüpfen des Tokens mit dem Objekt oder einem verfügbaren Platz für das Objekt, und
eine Einheit (310) konfiguriert zum Angeben des Platzes oder Annehmen und/oder Ausgeben des Objekts wobei die Objektzuordnung insbesondere ohne eine auf einem Endgerät des Endnutzers installierte Applikation und/oder ohne die Angabe oder Speicherung personenbezogener Daten erfolgt.

14. Vorrichtung (301) nach Anspruch 13, wobei die Einheit konfiguriert zum Lesen eines Zahlungsmittels für Near Field Communication, zum Scannen eines Codes, Lesen eines Magnetstreifens, Lesen eines Chips und/oder biometrische Erkennung eingerichtet ist.

15. Vorrichtung nach Anspruch 13 oder 14 ferner umfassend:
eine Einheit konfiguriert zum Autorisieren des Zahlungsvorgangs, und/oder
eine Einheit konfiguriert zum Einleiten eines Abbruchs des Zahlungsvorgangs bei dem Zahlungsserver.
